# EUROPÄISCHE PATENTSCHRIFT

(11) **EP 3 205 196 B1**
(45) Veröffentlichungstag und Bekanntmachung des Hinweises auf die Patenterteilung: **17.10.2018**
(21) Anmeldenummer: 17401009.0
(22) Anmeldetag: 09.02.2017
(51) Int. Cl.: A01C 15/00

(54) **DACHFÖRMIGE ABDECKPLANENANORDNUNG FÜR EINEN VORRATSBEHÄLTER EINER LANDWIRTSCHAFTLICHEN VERTEILMASCHINE**
ROOF-SHAPED TARPAULIN ARRANGEMENT FOR A STORAGE TANK OF AN AGRICULTURAL DISTRIBUTION MACHINE
ARRANGEMENT DE BÂCHE EN FORME DE TOIT POUR UN RÉSERVOIR DE STOCKAGE D'UNE MACHINE DE DISTRIBUTION AGRICOLE

(30) Priorität: 11.02.2016 DE 102016102374
(43) Veröffentlichungstag der Anmeldung: 16.08.2017
(73) Patentinhaber: Amazonen-Werke H. Dreyer GmbH & Co. KG, 49205 Hasbergen (DE)
(72) Erfinder: Kleine-Hartlage, Hubertus, 49186 Bad Iburg (DE); Walter, Achim, 49078 Osnabrück (DE); Nienstermann, Heinke, 49078 Osnabrück (DE); Hofter, Rainer, 49143 Bissendorf (DE)

(56) Entgegenhaltungen:
- EP-A1- 0 419 978
- DE-A1- 19 818 064
- DE-A1- 19 820 301
- US-A- 4 083 470

## Beschreibung

Die Erfindung betrifft eine dachförmige Abdeckplanenanordnung gemäß des Oberbegriffes des Patentanspruches 1.

Eine derartige dachförmige Abdeckplanenanordnung ist beispielsweise in DE°198°18°064°A1 beschrieben. Die Abdeckplane ist auf ihrer einen Seite am Vorratsbehälter befestigt und auf ihrer gegenüberliegenden Seite an einer ersten Stange. Diese Stange ist an einem Schwenkbügel befestigt, der in der Mitte des Vorratsbehälters, an dessen oberen Wandbereich mittels Gelenken angebracht und um eine sich in der Behältermitte befindliche Gelenkachse der Gelenke schwenkbar ist. Zusätzlich ist als Stützbügel eine zweite Stange vorgesehen, wodurch ein Satteldach gebildet wird. Der Stützbügel ist schwenkbar am Vorratsbehälter befestigt. Somit hat diese Ausgestaltung den Vorteil, dass die Abdeckplane zur zumindest teilweisen Öffnung der Einfüllöffnung des Behälters wegschwenkbar ist. Durch die Ausbildung als Satteldach ergeben sich schräg verlaufende Dachflächen, so dass beispielsweise Regenwasser nach unten abfließen kann. In ihrer den Behälter abdeckenden Position aber überdeckt die blickdichte Abdeckplane die Behälteröffnung vollständig.

Der Erfindung liegt daher die Aufgabe zugrunde, eine Abdeckplanenanordnung zu schaffen, die in ihrer die Behälteröffnung abdeckenden Position Sicht in das Innere des Behälters zur Kontrolle des Behälterinhalts zulässt.

Diese Aufgabe wird erfindungsgemäß dadurch gelöst, dass sich zumindest in einer der Dachflächen zumindest ein Sichtfenster befindet.

Somit wird die Voraussetzung dafür geschaffen, dass in den abgedeckten Vorratsbehälter hineingesehen werden kann. So kann der Bediener und/oder Führer der Verteilmaschine kontrollieren, ob noch ausreichend Material im Vorratsbehälter vorhanden ist und/oder ob der Materialausfluss in korrekter Weise erfolgt.

Bei einer gezogenen oder mittels Dreipunktkupplungselementen an einer Zugmaschine angebauten landwirtschaftlichen Maschine, die mit einem Vorratsbehälter ausgestattet ist, ist es vorteilhaft, während des Betriebes in diesen Behälter hinein zu schauen, um Betriebsparameter wie Füllstand, verbleibende Restmenge oder korrekte Funktionalität in einfacher Weise feststellen zu können. Besonders erstrebenswert ist es, wenn dazu die Arbeit nicht unterbrochen werden muss und somit Zeit gespart werden kann.

Daher sind die Sichtfenster vorzugsweise in der Dachfläche der der Zugmaschine zugewandten Ankuppelseite angeordnet. So kann der Fahrzeugführer von seiner Sitzposition in der Zugmaschinenkabine durch das ihm zugewandte Sichtfenster ins Innere des Behälters der angebauten Maschine sehen.

Um zu vermeiden, dass die Sicht beispielsweise von Spiegelungen, Reflexionen oder Parallaxe beeinträchtigt wird, ist die Dachfläche, in welcher das Sichtfenster angeordnet ist, schräg gegenüber der Waagerechten aufgestellt. Unter "waagerecht" wird hier die Ebene verstanden, welche von den Behälteroberkanten aufgespannt wird. Anstellwinkel von wenigstens 30° werden angestrebt, vorzugsweise Winkel zwischen 35° und 60°, insbesondere 38°.

Da der Anstellwinkel insbesondere wesentlich ist für die der Zugmaschine zugewandte Dachfläche, in welcher sich das Sichtfenster befindet, kann die als Satteldach ausgestaltete dachförmige Abdeckplanenanordnung asymmetrisch sein. Es weist also einen steileren und einen flacheren Anstellwinkel zur Waagerechten auf. Dabei befindet sich die zweite Stange näher an der Behälterkante, an der die Abdeckplane befestigt ist, als an der gegenüberliegenden. Sie ist also zwischen der Behälterkante, an der die Abdeckplane befestigt ist, und der Behältermitte angeordnet.

Angebaute landwirtschaftliche Maschinen, insbesondere großvolumige Verteilmaschinen, beschränken das Sichtfeld des Fahrzeugführers nach hinten und schräg hinten erheblich. Es ist anzustreben, dass die Behälterabdeckung das Sichtfeld nicht über das notwendige Mindestmaß hinaus weiter einschränkt. Aus diesem Grund ist die zweite Stange, an der die Abdeckplane befestigt ist, kürzer ausgebildet als die erste Stange und die Behälterkante, an der die Abdeckplane befestigt ist.

Durch diese verkürzte Ausgestaltung der zweiten Stange sind die Dachflächen trapezförmig ausgestaltet. Darüber hinaus sind die dreieckförmigen Stirnflächen des Satteldaches ausgehend von den stirnseitigen Behälterkanten zu den Enden der kürzeren zweiten Stange schräg angestellt. Dies gibt dem Fahrzeugführer die Möglichkeit, von seiner erhöhten Sitzposition in der Kabine der Zugmaschine einen größeren Bereich hinter und schräg hinter der Arbeitsmaschine einzusehen. Vor allem beim Rangieren und im Straßenverkehr wird dadurch die Sicherheit beträchtlich erhöht.

Um Füllstand, verbleibende Restmenge oder korrekte Funktionalität des Vorratsbehälters der landwirtschaftlichen Maschine zuverlässig beurteilen zu können, ist ein ausreichend großes und geeignet geformtes Sichtfensters notwendig. Die Form des Sichtfensters soll der der trapezförmigen Dachfläche, in der es angebracht ist, im Wesentlichen kongruent folgen. Insbesondere bei landwirtschaftlichen Verteilmaschinen ist es wichtig, tief in die Trichterspitzen sehen zu können. Bei geringen Restmengen kann so beurteilt werden, ob für eine weitere Überfahrt ausreichend Streugut im Behälter verblieben ist oder dieser neu befüllt werden muss. Die korrekte Funktionalität des in der Trichterspitze befindlichen Rührwerks kann ebenfalls auf diese Weise festgestellt werden. Die Trapezform des Sichtfensters unterstützt dies, da ausgehend von der zentrierten Position des Fahrzeugführers der entsprechende Blickwinkel in die Trichterspitzen durch die breite Trapezbasis freigegeben wird.

Die Ecken des Sichtfensters sind abgerundet. Insbesondere bei den spitzen Winkeln an der Trapezbasis vermeidet diese Ausgestaltung die Bildung von Rissen im Planenmaterial.

Weitere Einzelheiten der Erfindung sind der Beispielsbeschreibung und den Zeichnungen zu entnehmen. Die Zeichnungen zeigen
- Fig.1: eine an eine Zugmaschine angebaute landwirtschaftliche Verteilmaschine mit einer satteldachförmigen Abdeckplane in perspektivischer Ansicht schräg von vorne oben,
- Fig.2: den oberen Bereich eines Vorratsbehälters einer landwirtschaftlichen Verteilmaschine in perspektivischer Darstellung schräg von vorne oben,
- Fig.3: den oberen Bereich eines Vorratsbehälters einer landwirtschaftlichen Verteilmaschine in Frontalansicht und
- Fig.4: den oberen Bereich eines Vorratsbehälters einer landwirtschaftlichen Verteilmaschine in perspektivischer Ansicht schräg von hinten oben.

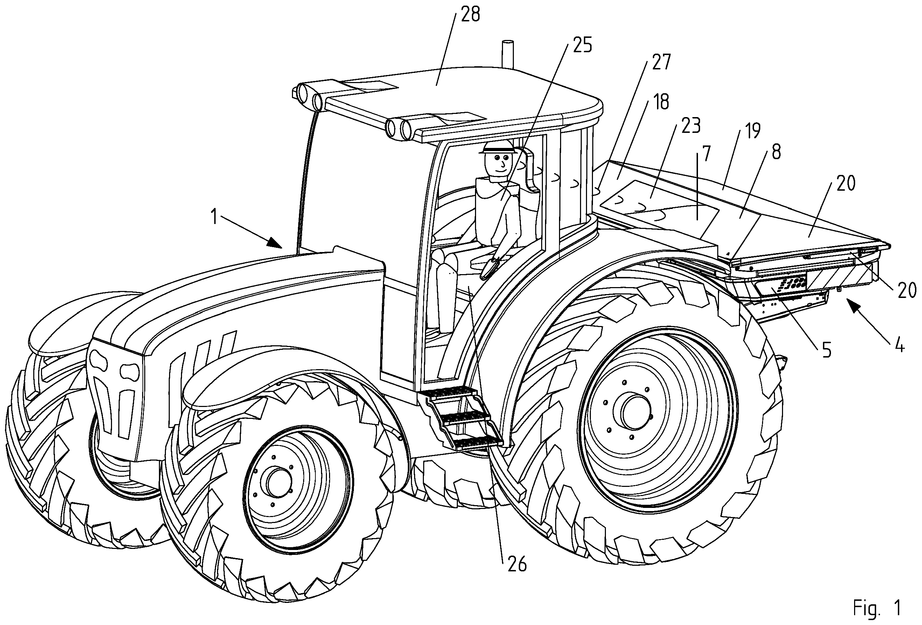

An einen Dreipunktkraftheber einer landwirtschaftlichen Zugmaschine 1, beispielsweise eines Ackerschleppers, wird über nur teilweise dargestellte Dreipunktkupplungselemente 2 der teilweise dargestellte Rahmen 3 einer landwirtschaftlichen Verteilmaschine 4 an die Zugmaschine 1 angekuppelt. Die landwirtschaftliche Verteilmaschine ist im gewählten Ausführungsbeispiel in Fig. 1 bis Fig. 4 als Zentrifugaldüngerstreuer ausgebildet. Dieser Zentrifugaldüngerstreuer weist einen Vorratsbehälter 5 auf, der auf dem teilweise dargestellten Rahmen 3 angeordnet ist. Auf der der Zugmaschine 1 zugewandten Seite, Ankuppelseite 6, sind nur teilweise dargestellte Dreipunktkupplungselemente 2 zum Ankuppeln des Rahmens 3 an eine Kupplungsvorrichtung einer landwirtschaftlichen Zugmaschine 1, beispielsweise eines Ackerschleppers, angeordnet. Der Vorratsbehälter 5 weist eine abgedeckt dargestellte Einfüllöffnung 7 auf, die sich im dargestellten Ausführungsbeispiel zumindest annähernd über den gesamten oberen Querschnitt des Vorratsbehälters 5 erstreckt.

Die Einfüllöffnung 7 des Vorratsbehälters 5 ist mittels einer Abdeckplane 8 abgedeckt. Die Abdeckplane 8 ist auf der Ankuppelseite 6 mittels geeigneter Befestigungsmittel 9, beispielsweise Schraubverbindung, im Bereich der Einfüllöffnung 7 am Vorratsbehälter 5 befestigt. Das gegenüberliegende Ende 10 der Abdeckplane 8 ist schlaufenartig ausgebildet. Durch den schlaufenartigen Bereich wird eine erste Stange 11 gesteckt. Die äußeren Enden 12 dieser ersten Stange 11 sind jeweils mit Schwenkstangen 13 verbunden. Die erste Stange 11 bildet gemeinsam mit den Schwenkstangen 13 einen Schwenkbügel 14. Im ankuppelseitigen Bereich weist die Abdeckplane 8 einen weiteren schlaufenartigen Bereich 15 auf, durch den eine zweite Stange 16 geführt ist. Diese zweite Stange 16 verläuft parallel zu der ersten Stange 11 und der Behälterkante 17, an der die Abdeckplane 8 befestigt ist, und ist im dargestellten Beispiel kürzer als die erste Stange 11 und als die Behälterkante 17 ausgebildet. Die zweite Stange 16 ist an weiteren, nicht dargestellten Schwenkstangen befestigt, mit welchen sie einen zweiten Schwenkbügel bildet.

Der Schwenkbügel 14 und der zweite, nicht dargestellte Schwenkbügel sind schwenkbar am oberen Bereich des Vorratsbehälters 1 befestigt und weisen Schwenkachsen auf, die parallel zu den Stangen 11 und 16 verlaufen.

Durch die gegenüber der ersten Stange 11 kürzer ausgebildete zweite Stange 16 sind die von den Behälterkante 17 bzw. der ersten Stange 11 verlaufenden Dachflächen 18 und 19 trapezförmig ausgebildet. Die dreieckförmigen Stirnflächen 20 der Abdeckplane 8, die von den Stirnseiten 21 des Vorratsbehälters 5 zu den äußeren Enden der kürzeren, zweiten Stange 16 verlaufen, sind schräg angestellt.

Im dargestellten Beispiel ist die zweite Stange 16 näher an der Behälterkante 17 angeordnet, an der die Abdeckplane 8 befestigt ist, als an der gegenüberliegenden Behälterkante 22 bzw. der ersten Stange 11. Dadurch ist die satteldachförmige Abdeckplanenanordnung asymmetrisch und die dreieckförmigen Stirnflächen 20 sind nicht als gleichschenklige Dreiecke ausgebildet. Der Anstellwinkel gegenüber der Waagerechten der ankuppelseitigen Dachfläche 18 beträgt im dargestellten Beispiel die bevorzugten 38°. Die Waagerechte wird im dargestellten Beispiel durch die Ebene festgelegt, die die Behälterkanten 17 und 22 sowie die stirnseitigen Kanten 21 aufspannen.

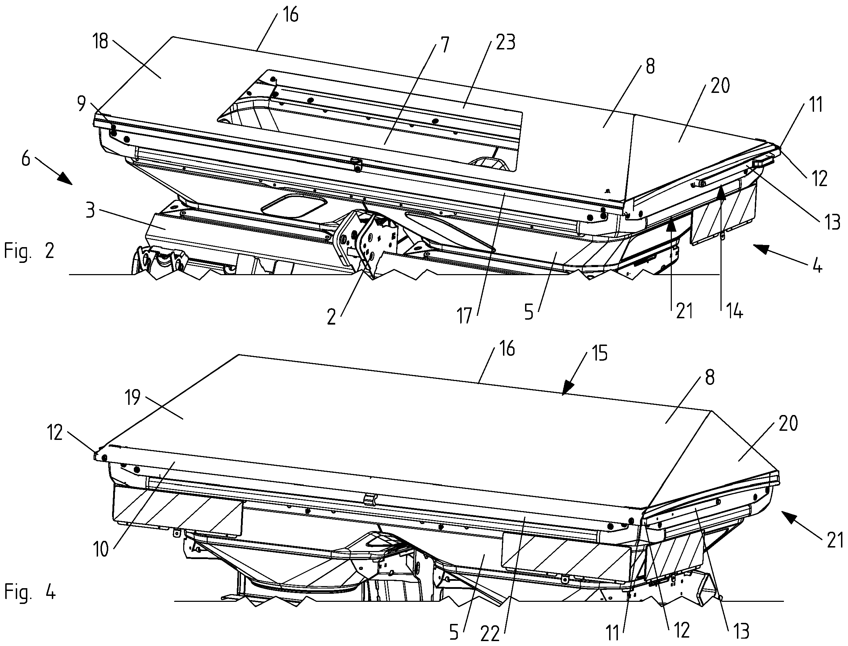

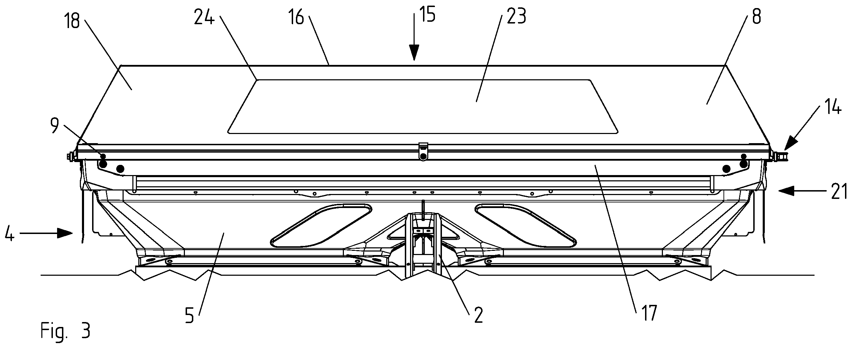

In der ankuppelseitigen, trapezförmigen Dachfläche 18 der Abdeckplane 8 ist ein der Form der Dachfläche 18 kongruent folgendes, ebenfalls trapezförmiges Sichtfenster 23 angeordnet, wie es Fig. 3 in Frontalansicht und Fig. 2 in perspektivischer Darstellung schräg von vorne oben zeigt. Dieses Sichtfenster 23 weist abgerundete Ecken 24 auf und ist derart bemessen, dass ein Fahrzeugführer 25 von seiner erhöhten Sitzposition 26 in das Innere des Behälters blicken kann.

Die Trapezform des Sichtfensters 23 gestattet eine Sichtlinie 27 von der zentralen Sitzposition 26 des Fahrzeugführers 25 bis in die nicht dargestellten Trichterspitzen des Vorratsbehälters 5. Fig. 1 zeigt dies.

Die derart gestaltete Abdeckplanenanordnung verschließt den Vorratsbehälter 5 vollständig und erlaubt dennoch einen Blick durch das Sichtfenster 23 ins Behälterinnere, wie es in Fig. 1 und Fig. 2 gezeigt ist. Dabei muss der Arbeitsvorgang nicht unterbrochen werden und der Fahrzeugführer 25 kann von seiner Sitzposition 26 in der Kabine 28 der Zugmaschine 1 beispielsweise Füllstand, Restmenge oder Funktionalität seiner Verteilmaschine 4 überprüfen.

## Patentansprüche

1. Dachförmige Abdeckplanenanordnung mit einem Vorratsbehälter (5) einer landwirtschaftlichen Verteilmaschine (4), dessen obere Behälteröffnung, insbesondere Einfüllöffnung (7), mittels einer Abdeckplane (8) abgedeckt ist, wobei die Abdeckplane in ihrer die Behälteröffnung (7) abdeckenden Position ein Satteldach formt, **dadurch gekennzeichnet, dass** sich zumindest in einer der Dachflächen (18,19) zumindest ein Sichtfenster (23) befindet.

2. Dachförmige Abdeckplanenanordnung nach Anspruch 1, für eine als Anbaumaschine ausgebildeten Verteilmaschine (4) mit Dreipunktkupplungselemente (2) aufweisend auf ihrer Ankuppelseite (6), **dadurch gekennzeichnet, dass** sich in der Dachfläche (18) der einer Zugmaschine (1) zugewandten Ankuppelseite (6) wenigstens ein Sichtfenster (23) in der Abdeckplane (8) befindet.

3. Dachförmige Abdeckplanenanordnung nach Anspruch 1, **dadurch gekennzeichnet, dass** die Dachfläche (18) auf der der Zugmaschine (1) zugewandten Ankuppelseite (6) mit einem Winkel von zumindest 30°, vorzugsweise mit 35° bis 60°, insbesondere 38°, zur Waagerechten schräg aufgestellt ist.

4. Dachförmige Abdeckplanenanordnung nach Anspruch 2, **dadurch gekennzeichnet, dass** das Satteldach asymmetrisch ausgebildet ist und sich in der steiler angestellten Dachfläche (18) der der Zugmaschine (1) zugewandten Ankuppelseite (6) wenigstens ein Sichtfenster (23) in der Abdeckplane (8) befindet.

5. Dachförmige Abdeckplanenanordnung nach zumindest einem der Ansprüche 1 bis 4, wobei die Abdeckplane (8) an ihrer einen Seite am Vorratsbehälter (5) und an ihrer gegenüberliegenden Seite an einer ersten Stange (11), die an einem um eine etwa in der Mitte des Vorratsbehälters (5) befindlichen Gelenkachse verschwenkbaren Schwenkbügel (14) befestigt und/oder Bestandteil des Schwenkbügels (14) ist, befestigt ist, wobei der Schwenkbügel (14) am Vorratsbehälter (5) mittels Gelenkanordnungen schwenkbar angelenkt ist, wobei die Abdeckplane (8) zur Freigabe der Einfüllöffnung (7) des Vorratsbehälters (5) wegschwenkbar ist, wobei an der Abdeckplane (8) zumindest eine zweite Stange (16) zwischen der Befestigung der Abdeckplane (8) am Vorratsbehälter (5) und der ersten Stange (11) und beabstandet zu dieser angeordnet ist, wobei die zweite Stange (16) parallel zu der ersten Stange (11) und der Behälterkante (17) verläuft, an der die Abdeckplane (8) befestigt ist, wobei die zweite Stange (16) in der den Behälter (5) verschließenden Position der Abdeckplane (8) höher gelegen ist, als die erste Stange (11) und die Behälterkante (17), an der die Abdeckplane (8) befestigt ist, **dadurch gekennzeichnet, dass** die zweite Stange (16) an der Abdeckplane (8) näher an der Kante (17) des Vorratsbehälters (5) befestigt ist, an der die Abdeckplane (8) am Vorratsbehälter (5) befestigt ist, als an der ersten Stange (11).

6. Dachförmige Abdeckplanenanordnung nach zumindest einem der Ansprüche 1 bis 5, **dadurch gekennzeichnet, dass** die Form des Sichtfensters (23) im Wesentlichen kongruent der Form der Dachfläche (18) folgt, in der es angebracht ist.

7. Dachförmige Abdeckplanenanordnung nach zumindest einem der Ansprüche 1 bis 6, **dadurch gekennzeichnet, dass** die Ecken (24) des Sichtfensters (23) abgerundet sind.

## Claims

1. Roof-shaped covering tarpaulin arrangement with a supply container (5) of an agricultural distributing machine (4), the upper opening, in particular filling opening (7), of which container is covered by means of a covering tarpaulin (8), wherein, in its position in which it covers the container opening (7), the covering tarpaulin forms a saddle roof, **characterized in that** at least one viewing window (23) is situated at least in one of the roof surfaces (18, 19).

2. Roof-shaped covering tarpaulin arrangement according to Claim 1, for a distributing machine (4) in the form of an attachment machine having three-point linkage elements (2) comprising on its coupling side (6), **characterized in that** at least one viewing window (23) is situated in the covering tarpaulin (8) in the roof surface (18) of the coupling side (6) facing a tractor machine (1).

3. Roof-shaped covering tarpaulin arrangement according to Claim 1, **characterized in that**, on the coupling side (6) facing the tractor machine (1), the roof surface (18) is positioned obliquely at an angle of at least 30°, preferably at 35° to 60°, in particular 38°, to the horizontal.

4. Roof-shaped covering tarpaulin arrangement according to Claim 2, **characterized in that** the saddle roof is of asymmetrical design and at least one viewing window (23) is situated in the covering tarpaulin (8) in the steeper-set roof surface (18) of the coupling side (6) facing the tractor machine (1).

5. Roof-shaped covering tarpaulin arrangement according to at least one of Claims 1 to 4, wherein the covering tarpaulin (8) is fastened on its one side to the supply container (5) and on its opposite side to a first bar (11) which is fastened to a pivoting bow (14) which can be pivoted about an articulation axis situated approximately in the centre of the supply container (5) and/or which is a constituent part of the pivoting bow (14), wherein the pivoting bow (14) is pivotably articulated on the supply container (5) by means of articulation arrangements, wherein the covering tarpaulin (8) can be pivoted away to free the filling opening (7) of the supply container (5), wherein at least one second bar (16) is arranged on the covering tarpaulin (8) between the fastening of the covering tarpaulin (8) to the supply container (5) and the first bar (11) and at a distance from the latter, wherein the second bar (16) extends parallel to the first bar (11) and the container edge (17) to which the covering tarpaulin (8) is fastened, wherein, in the position of the covering tarpaulin (8) in which it closes the container (5), the second bar (16) is situated higher than the first bar (11) and the container edge (17) to which the covering tarpaulin (8) is fastened, **characterized in that** the second bar (16) is fastened to the covering tarpaulin (8) closer to the edge (17) of the supply container (5) at which the covering tarpaulin (8) is fastened to the supply container (5) than to the first bar (11).

6. Roof-shaped covering tarpaulin arrangement according to at least one of Claims 1 to 5, **characterized in that** the shape of the viewing window (23) substantially congruently follows the shape of the roof surface (18) in which it is incorporated.

7. Roof-shaped covering tarpaulin arrangement according to at least one of Claims 1 to 6, **characterized in that** the corners (24) of the viewing window (23) are rounded off.

## Revendications

1. Agencement de bâche de recouvrement en forme de toit, avec un réservoir (5) d'une machine de répartition agricole (4) dont l'ouverture supérieure de réservoir, en particulier l'ouverture de remplissage (7), est couverte au moyen d'une bâche de recouvrement (8), la bâche de recouvrement formant, dans sa position recouvrant l'ouverture de réservoir (7), un toit à deux pentes, **caractérisé en ce qu'**au moins dans l'une des surfaces du toit (18, 19) se trouve au moins une fenêtre d'inspection (23).

2. Agencement de bâche de recouvrement en forme de toit selon la revendication 1, pour une machine de répartition (4) réalisée sous forme de machine portée, comprenant des éléments d'accouplement à trois points (2), présentant, sur son côté d'accouplement (6), **caractérisé en ce que** dans la surface de toit (18) du côté d'accouplement (6) tourné vers une machine de traction (1), au moins une fenêtre d'inspection (23) est réalisée dans la bâche de recouvrement (8).

3. Agencement de bâche de recouvrement en forme de toit selon la revendication 1, **caractérisé en ce que** la surface de toit (18) du côté d'accouplement (6) tourné vers la machine de traction (1) est orientée obliquement par rapport à l'horizontale avec un angle d'au moins 30°, de préférence de 35° à 60°, en particulier de 38°.

4. Agencement de bâche de recouvrement en forme de toit selon la revendication 2, **caractérisé en ce que** le toit à deux pentes est réalisé de manière asymétrique et, dans la surface de toit (18) inclinée de manière plus raide du côté d'accouplement (6) tourné vers la machine de traction (1), au moins une fenêtre d'inspection (23) est réalisée dans la bâche de recouvrement (8) .

5. Agencement de bâche de recouvrement en forme de toit selon ou moins l'une quelconque des revendications 1 à 4, dans lequel la bâche de recouvrement (8) est fixée au niveau de l'un de ses côtés au réservoir (5) et au niveau de son côté opposé à une première barre (11) qui est fixée à un arceau pivotant (14) pouvant pivoter autour d'un axe d'articulation se trouvant approximativement au milieu du réservoir (5) et/ou qui fait partie de l'arceau pivotant (14), l'arceau pivotant (14) étant articulé de manière pivotante au réservoir (5) au moyen d'agencements d'articulation, la bâche de recouvrement (8) pouvant être enlevée par pivotement pour libérer l'ouverture de remplissage (7) du réservoir (5), au moins une deuxième barre (16) étant disposée sur la bâche de recouvrement (8) entre la fixation de la bâche de recouvrement (8) au réservoir (5) et la première barre (11) et à distance de celle-ci, la deuxième barre (16) s'étendant parallèlement à la première barre (11) et au bord du réservoir (17) auquel est fixée la bâche de recouvrement (8), la deuxième barre (16) étant placée plus haut dans la position de la bâche de recouvrement (8) fermant le réservoir (5) que la première barre (11) et que le bord du réservoir (17) auquel est fixée la bâche de recouvrement (8), **caractérisé en ce que** la deuxième barre (16) est fixée à la bâche de recouvrement (8) plus près du bord (17) du réservoir (5) auquel est fixée la bâche de recouvrement (8) sur le réservoir (5) que la première barre (11).

6. Agencement de bâche de recouvrement en forme de toit selon au moins l'une quelconque des revendications 1 à 5, **caractérisé en ce que** la forme de la fenêtre d'inspection (23) suit de manière essentiellement congruente la forme de la surface de toit (18) dans laquelle elle est montée.

7. Agencement de bâche de recouvrement en forme de toit selon au moins l'une quelconque des revendications 1 à 6, **caractérisé en ce que** les coins (24) de la fenêtre d'inspection (23) sont arrondis.
